Europäisches Patentamt

European Patent Office

Office européen des brevets

(19)

(11) **EP 1 209 593 A1**

(12) **EUROPEAN PATENT APPLICATION**
published in accordance with Art. 158(3) EPC

(43) Date of publication:
29.05.2002 Bulletin 2002/22

(51) Int Cl.⁷: **G06F 17/60**, G06F 19/00,
G06F 17/30

(21) Application number: 00979998.2

(22) Date of filing: 08.12.2000

(86) International application number:
PCT/JP00/08691

(87) International publication number:
WO 01/43005 (14.06.2001 Gazette 2001/24)

(84) Designated Contracting States:
DE GB

(30) Priority: 13.12.1999 JP 35304799

(71) Applicant: Knowledge Modeling Institute Inc.
Tokyo 164-0012 (JP)

(72) Inventor: MATSUZUKI, Tadao
Suginami-ku, Tokyo 167-0051 (JP)

(74) Representative: Gleiss & Grosse
Maybachstrasse 6 A
70469 Stuttgart (DE)

(54) **METHOD AND APPARATUS FOR MANAGING BUSINESS DATA**

(57) A business data management method and a business data management apparatus are provided. These enable the user to handle and manage business at low cost. The structural components include a control data service section, a terminal section, and communication means for connecting the control data service section and the terminal section. A control address, used for accessing a data cell that stores data to be used by the terminal section, is fetched from the control cell of the control data service section by way of the communication means.

FIG. 3

Printed by Jouve, 75001 PARIS (FR)

## Description

Technical Field

The present invention relates to a management method and a management apparatus for business data. By using the system of the present invention, a user can process and manage business without incurring a large amount of money. By using the system of the present invention, a provider can make a profit by receiving the usage charge the user pays for using the system.

Background Art

In recent years, computers are in use in various kinds of business, and management of a variety of items is conducted by use of them. In addition, the management performed by a company is not limited to a single kind but covers various kinds of management. Further, the manner in which the company management is done is often changed, and so is the company system. Each time a new company is started or the corporate system of an existing company is changed, the software of computers has to be altered or new computers have to be introduced. The cost needed for these are enormous. When computers are newly bought, the related software has to be set up. This is very costly and takes time.

As described above, the introduction of new computers entails development of new software or revision or alteration to existing software. This requires a high cost and long time not only for salespersons but also for users.

Disclosure of Invention

Accordingly, an object of the present invention is to provide a management method and apparatus for business data, which enables a user to process business without entailing a high cost and to easily manage business without entailing a high cost.

Another object of the invention is to provide a management method and apparatus for business data, which enables a provider to make a profit by receiving the usage charge the user pays for using the system.

To achieve these objects, the present invention provides a business data management method which is for use in a system comprising a control data service section, a terminal section, and communication means for connecting the control data service section and the terminal section to each other, the data service section including a control address used by the terminal section, and the terminal section including a storage section for storing a data cell, the business data management method comprising the steps of fetching the control address through the communication means, and accessing the data cell by use of the control address.

The present invention also provides a business data management method which is for use in a system comprising a terminal section connectable to communication means, a storage section provided in the terminal section and storing a control cell in which a control address is stored, and an IC card connectable or disconnectable from the terminal section and storing a data cell, the business data management method comprising steps that are executed when data is written in the data cell of the IC card in response to a user's operation, the steps enabling a control address, used for accessing the data cell, to be fetched from the control cell of the terminal section by way of the communication means, and setting a data write address by use of the control address.

The present invention further provides a business data management method which is for use in a system comprising a terminal section connectable to communication means, an IC card connectable or disconnectable from the terminal section, and a control cell storage section provided in the IC card and storing a data cell and control addresses serving as read/write addresses of the data cell, the business data management method comprising steps that are executed when data is written in the data cell in response to a user's operation, the steps enabling the control address, used for accessing the data cell, to be fetched from the control cell, and setting the write address of the data.

Still further, the present invention provides a business data management method which is for use in a system comprising a data service section, a terminal section, and communication means for connecting the data service section and the service section, the data service section including a control cell storage area in which a data cell and write and read addresses of the data cell are stored, the business data management method comprising the steps of: causing the terminal section to fetch the data cell and the control cell through the communication means; writing data in the data cell by entering an operation input from the operation section and using the control cell; and transmitting the data cell, in which at least data is written, to the data service section through the communication means.

Moreover, the present invention provides a business data management apparatus comprising: a data cell storage section; a storage section for storing a control cell having control addresses which include write and read addresses of the data cell; means, operating when data is written in the data cell, for fetching the control access, which is used for accessing the data cell, from the control cell and setting the read or write address of the data; and means for fetching the control cell from a remote service section through communication means and using the control address included in the control cell.

Brief Description of Drawings

FIG. 1 is a diagram showing a basic configuration of a business communication system to which the method of the present invention is applied.

FIG. 2 is a diagram showing a basic configuration of the personal computer shown in FIG. 1.

FIG. 3 is an explanatory diagram illustrating one embodiment of the present invention.

FIG. 4A shows a control cell, and FIG. 4B is an explanatory diagram illustrating the functions of the control cell.

FIG. 5 is also a diagram illustrating the functions of the control cell.

FIG. 6 is also a diagram illustrating the functions of the control cell.

FIG. 7 is an example of a slip which is shown to illustrate the operation of the system of the present invention.

FIG. 8 illustrates relationships among the function blocks of the system of the present invention.

FIG. 9 is an explanatory diagram illustrating functions that are provided for slips employed in the system of the present invention.

FIG. 10 is also an explanatory diagram illustrating functions that are provided for slips employed in the system of the present invention.

FIG. 11 is also an explanatory diagram illustrating functions that are provided for slips employed in the system of the present invention.

FIG. 12 is an explanatory diagram illustrating functions that are provided for slips employed in the system of the present invention.

FIG. 13 shows a basic configuration of a system according to another embodiment of the present invention.

FIG. 14 shows a basic configuration of a system according to still another embodiment of the present invention.

FIG. 15 shows a basic configuration of a system according to still another embodiment of the present invention.

FIG. 16 shows a basic configuration of still another embodiment of the present invention.

FIG. 17 illustrates how information is exchanged between cells used in the present invention.

Best Mode for Carrying Out the Invention

The best mode of the present invention will now be described with reference to the accompanying drawings.

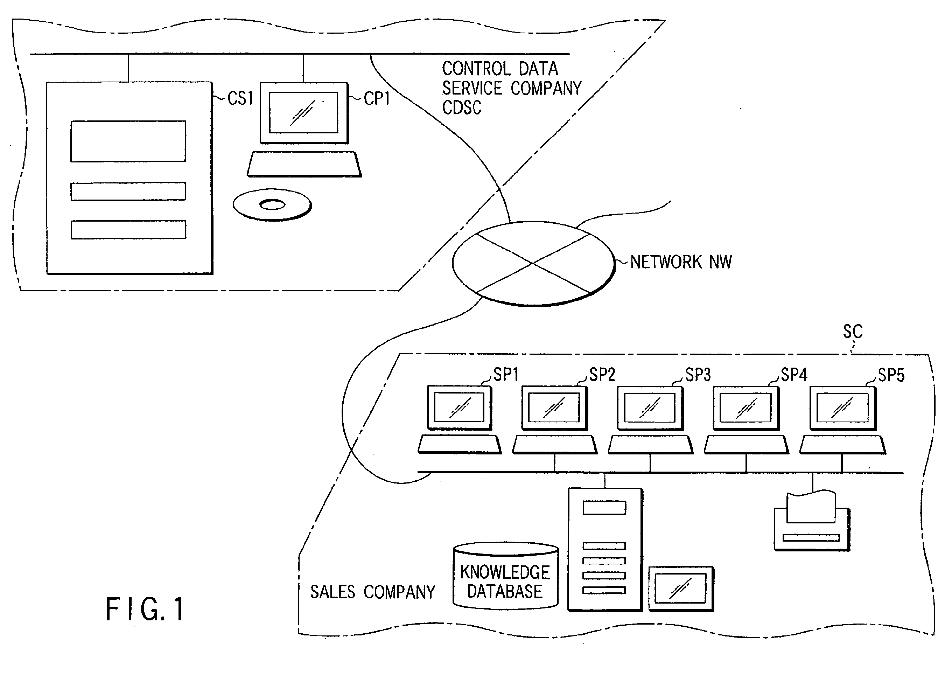

FIG. 1 shows the entire network to which the present invention is applied. In FIG. 1, a control data service company CDSC, a sales company SC, and a network NW are illustrated by way of example. In actuality, a large number of companies are connected to the control data service company CDSC through the network NW. The network may be either a wire network or a wireless network; alternatively, it may be a public line.

In the control data service company CDSC, a main server CS1 and a terminal device (i.e., a personal computer) CP1 are provided. In FIG. 1, only one terminal device is shown, but many terminal devices may be provided. In the sales company SC, server SS1 and terminal devices SP1, SP2, SP3, SP4 and SP5 are provided, and these are connected together by an intra-company network. The infra-company network for connection may replaced with another suitable communication means.

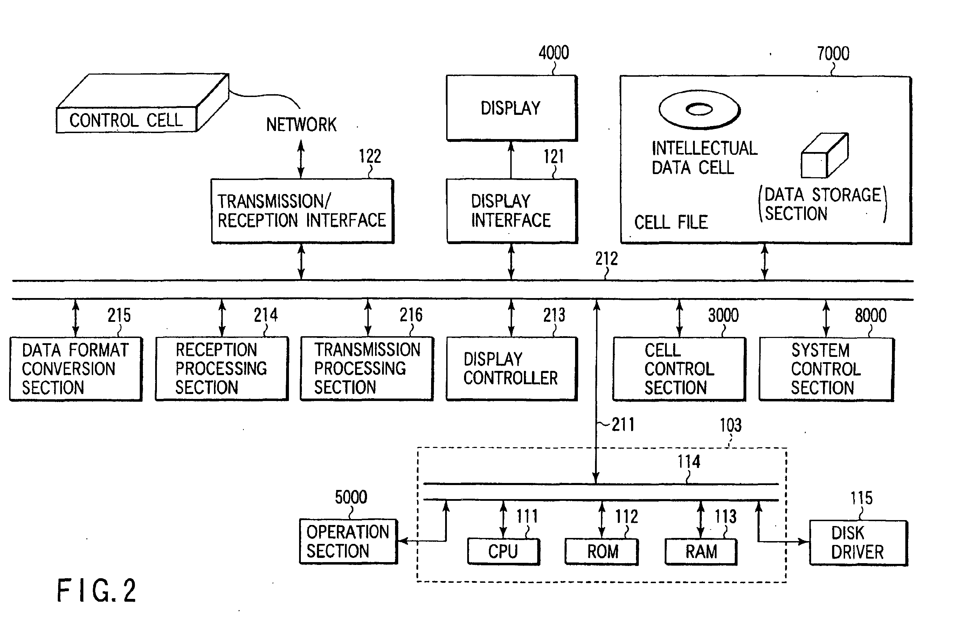

FIG. 2 shows a basic configuration of terminal device SP1 (microcomputer) described above.

Reference numeral 103 denotes a hardware system control section, wherein a CPU 111, a ROM 112 and a RAM 113 are connected together by means of a bus 114. An operation section 500 is connected to the bus 114; likewise, a disk driver 115 is connected thereto.

The ROM 112 stores a program which controls the basic operation of the control section 103 and which functions as an operation system (OS). The CPU 111 exchanges instructions with the ROM 112 and executes operational processing on the basis of the OS. The RAM 113 is used as a work memory for temporarily storing data.

The bus 114 described above is connected to bus 212 through bus 211. A function block, which characterizes the present invention, is connected to bus 212.

A display 4000 is connected to bus 212 through a display interface 121. Bus 212 is connected to a network through a transmission/reception interface 122. A public telephone line, an Internet line, an intranet line, or the like may constitute the network.

A display controller 213 manages the images and data displayed on the display 4000. A reception processing section 214 temporarily stores and holds data supplied through the transmission/reception interface 122. When necessary, a data format conversion section 215 changes the format of the data fetched by the reception processing section 214, and the reception processing section 214 stores the format-changed data.

Data stored in a transmission processing section 216 is transmitted to the network through the transmission/reception interface 122. The transmission data includes a telephone number and an Identification number (ID), which are used for specifying the destination of the transmitted data. The transmission data is scrambled before they are transmitted. Depending upon the destination, the data format conversion section 215 may change the format of the transmission data before transmission. This is because the data format of the computer to which the data is transmitted may differ from that of the present apparatus.

The data format conversion section 215 has a function of fetching reception data after changing the item name of the reception data. By way of example, let us suppose that a trading partner has sent a payment slip of a given item for sale. In this case, the recipient processes the payment slip as a collection slip. Let us also suppose that the trading partner has sent a slip indicating that a given item has been sold. In this case, the recipient processes the slip as representing that the item has to be bought. If the trading partner has sent a slip indicating that an item has been ordered, then the recipient processes the slip as representing that the item must be shipped. The function of changing slip items as above is referred to as a slip item name conversion function.

Also, the data format conversion section 215 has a language conversion dictionary function of translating business terms into equivalents of another language, and a currency unit conversion function of executing currency unit conversion.

Therefore, the item names of a slip displayed on the screen can be indicated in several languages. When slip data is written in a different language from that of the system that receives the slip data, the item names of the slip can be converted into equivalents of the language desired by the user.

A cell control section 3000 to be described later is connected to bus 212. A cell file 7000 storing a group of cells is also connected to bus 212.

Basically, in the business support system of the present invention, all microcomputers can share the same data and format. Needless to say, the computers that share the data are limited to those computers which are allowed to perform mutual transmission and reception of signals.

As can be seen from the above, sales information is not accumulated in one computer; they are stored in all computers that have the function of performing transmission and reception of signals. Hence, the transmission processor section does not function until the updating processing for sales data has been completed. Since, in this manner, different computers share data, the breakdown of one computer does not result in any data loss. When a new microcomputer is added to the infra-company network and this computer is made to use data, it is supplied with data transmitted from another computer.

In the above, each function block was described as being constituted by hardware. Needless to say, however, the data format conversion section 215, reception processing section 214, transmission processing section 216, display controller 213, cell control section 3000, and cell file (data storage section) 7000 may be in the form of software recorded in a recording medium (such as an optical disk or a magnetic disk). By installing the software is installed in a personal computer, the function blocks described above are realized. As can be seen from this, the technical concept of the present invention is applicable both to the data structure of data stored in a recording medium and to control data that realizes the functions described above.

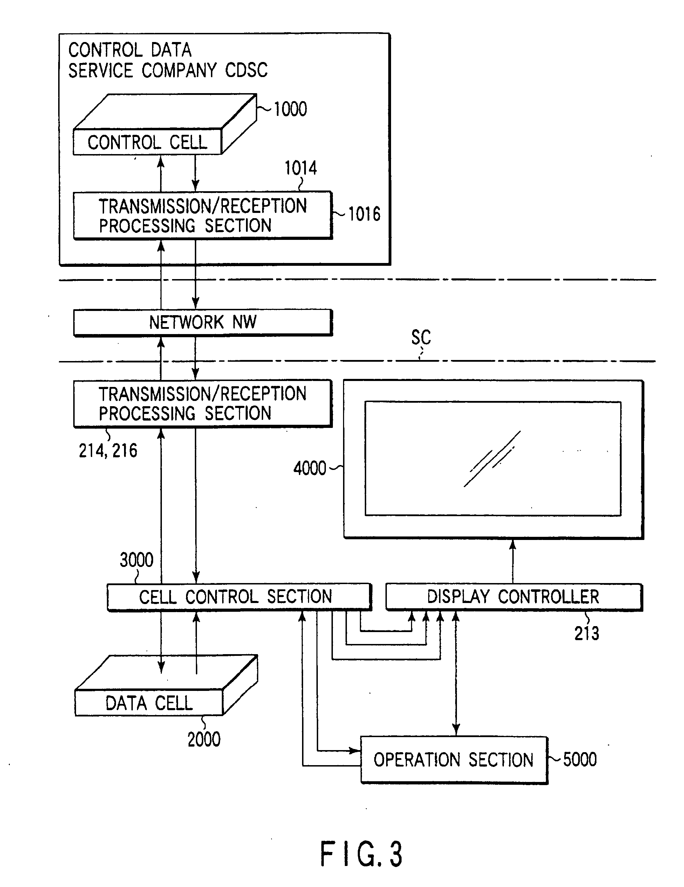

The unique configuration of the present invention will now be described with reference to FIG. 3.

The control data service company CDSC is provided with a control cell 1000. The control cell 1000 stores read and write control addresses, which are referred to when data is read out from a data cell 2000 or written in it.

A control address is read out from the control cell 1000 when access data (read data) from the cell control section 3000 is accessed by means of the transmission processing section 216, network NW and reception processing section 1014. The readout control address is fetched in the cell control section 3000 after passing through the transmission processing section 1016, network NW, and reception processing section 214.

The control address is supplied to the data cell 2000 as either a read data address or a write data address. The data read out from the data cell is supplied through the cell control section 3000 and display controller 213 to the display 4000, on which it is indicated.

Let us suppose that either a slip name or a slip code is entered from the operation section 5000. In response thereto, the cell control section 3000 requests a control address regarding the slip and sends this request to the control cell 1000 of the control data service company through communication means.

When the control address regarding the slip is supplied from the control cell 1000, the cell control section 3000 read out the slip from the data cell 2000 (the term "slip" used herein covers a slip image and image data, such as alphanumeric characters). The readout slip is shown on the display under the control of the display control section 213.

After the user confirms the screen on the display (e.g., the slip and its item names and numbers), the operation for writing, updating or correcting data is carried out by operating the operation section 5000. When data on the slip is entered and saved, the slip and the related is are stored in the data cell 2000.

When the line connected to the control cell 1000 of the control data service company CDSC is available, control addresses for reading out various slips from the data cell 2000 can be fetched upon request. When the line is disconnected, the control addresses cannot be fetched.

At the time, the control data service company CDSC can charge the fee for the line connection.

In the above, the control cell 1000 was described as being provided in the control data service company CDSC, and the data cell being provided in the user's personal computer. This arrangement may be reversed. That is, the data cell 2000 may be provided in the control data service company CDSC, and the control cell 1000 may be in the user's microcomputer.

When the alternative arrangement is employed, the user selects a control address and sends it to the control data service company CDSC. In response, the data (information on a slip or the like) corresponding to the address designated by the control address is sent from the control data service company CDSC and displayed on the display 4000.

In the above description, reference was made to the case where the control address is fetched when the control data service company CDSC and the terminal were connected at all times. In place of this, the entirety of the control cell 1000 may be transmitted. In this case, the control cell may be temporarily stored in the memory. The control cell can be cleared in response to an instruction for terminating the operation of the terminal.

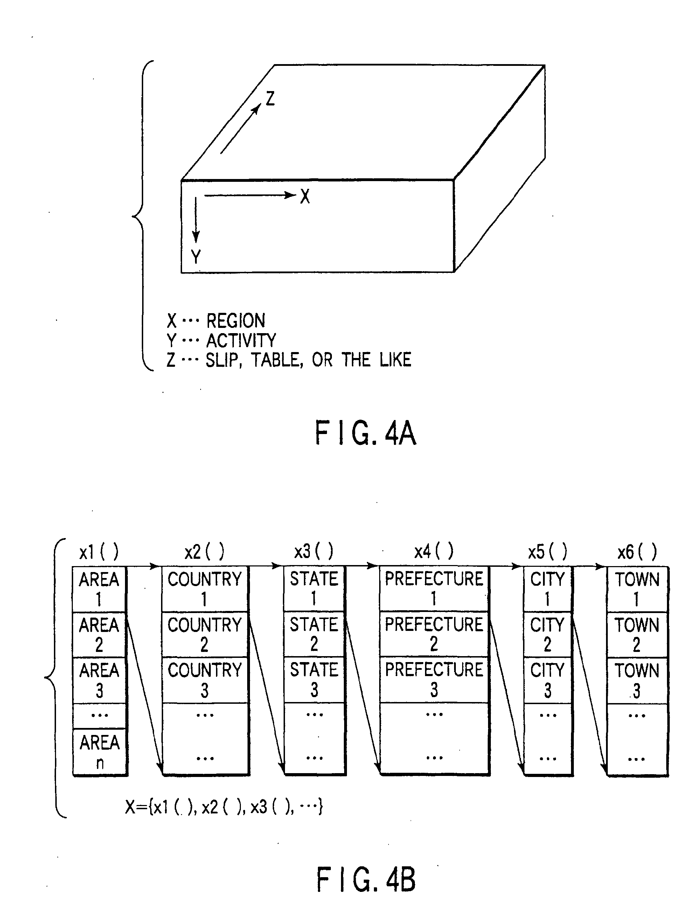

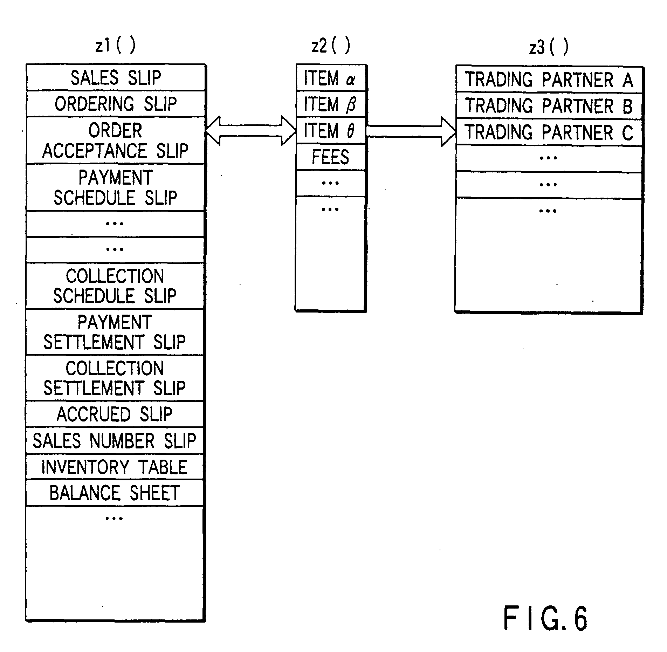

The control cell 1000 and the data cell 2000 will be described in more detail with reference to FIGS. 4A to 4B, 5 and 6.

FIG. 4A illustrates the basic data structure of a cell according to the present invention. This cell is a control cell 1000 used for data access. Although the present invention defines various kinds of cells, the control cell will be described herein by way of example.

The control cell 1000 is a cell for a slip or the like. The control cell 1000 has control addresses designated by three axes, namely, an X-axis, a Y-axis and a Z-axis. On the basis of this control address, the data cell can be accessed.

When the parameters corresponding to the X-, Y and Z-axes are entered, the control cell identifies the slip stored at the parameter address determined by the parameters. Although it would be more accurate to say that the control address for identifying the slip is determined, the description would be simpler by referring to the names of the data stored in the data cell 2000. Although a G-axis also exists, it will be described later.

The parameters corresponding to the axes will be described.

$$\text{X-axis parameter} = X\ (x1(),\ x2(),\ x3()\ \cdots)$$

$$\text{Y-axis parameter} = Y\ (y1(),\ Y2()\ y3()\ \cdots)$$

$$\text{Z-axis parameter} = Z\ (z1(),\ z2(),\ z3()\ \cdots)$$

$$\text{G-axis parameter} = G\ (\cdots -g2(),\ -g1(),\ g0(),$$

$$+g1(),\ +g2(),\ \cdots)$$

When parameter x0 is given in the X-axis parameter, a table of areas (e.g., the North America, South America, Asia, Europe, Australia) is shown on a display. When a designated number is inserted within the parentheses of parameter x1(), one of the areas is specified. Then, the table of the countries corresponding to the specified area (e.g., the Asia) is displayed on the display. When a designated number is inserted within the parentheses of parameter x2(), one of the countries is specified. When a designated number is inserted within the parentheses of parameter x3(), one of the states is specified. By inserting a number in parentheses in a similar manner, the data can be specified up to a city.

When the designation should be stopped at the country level, a predetermined number or "0" is inserted in the parentheses of x3() and subsequent parentheses. When an operation indicating the "X-axes designation OK" is performed, the data that has been selected until then is retained.

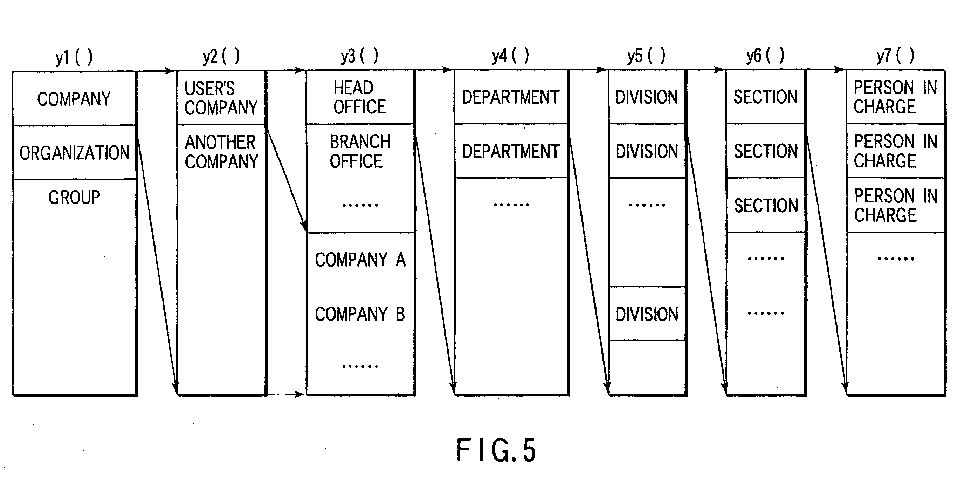

When parameter y0 is entered in the Y-axis parameter, the table showing the items corresponding to Y1() (i.e., a company, an organization, and a group) is displayed, as shown in FIG. 5. When a number or the like is filled in the parentheses, the company, organization or group is specified. Assuming that the company is designated, a table indicating whether the company is the user's company or another company is shown in the hierarchical level of Y2(). By inserting a number in the parentheses of Y2(), it can be identified whether the company is the user's company or another company. In response. to this, a table indicating whether the office is the head office or a branch office is displayed. Alternatively, a table showing branch offices is displayed. Assuming that the head office is selected, the hierarchical level corresponding to Y4() is shown, and a table of departments is displayed. By inserting a designated number in the parentheses of y4(), a department can be specified. By continuing the designation to the hierarchical levels of y5(), y6() and y7(), the persons in charge can be designated individually.

When parameter z0 is entered in the Z-axis parameter, the kinds of worksheet (e.g., a slip) are displayed. In the present invention, the term "worksheet" is used to refer to description sheets that are meaningful in terms of business, such as a variety of slips, ledgers, continuous forms of paper, tables, etc. When a slip code is entered in the parentheses in the hierarchical level of z1(), the kind of slip is identified. When an item code is described in the parentheses of z2(), the slip used for that particular item is identified.

Let us assume that the designated slip is a sales slip and the designated item is item $\alpha$ for sales. In this case, the number of items sold and the unit price are displayed. If the parameters corresponding to the X-axis and Y-axis are given then, the sales slip for item $\alpha$ can be displayed, with the data on one geographic region or one person in charge being extracted.

When an item for sales is specified, a trading partner corresponding to the z3() hierarchical level can be designated. By this designation, it is possible to display which person A1 sold items $\alpha$, as well as the name of the company that purchased the items and the number of items that were sold. A plurality of kinds of items for sale can be specified.

When entering parameters of the Z-axis, the designation of an item selection parameter may be followed by the designation of a slip parameter.

Various methods are available when inputting parameters. For example, the schematic diagram of the items corresponding to the X-axis, that of the items corresponding to the Y-axis and that of the items corresponding to the Z-axis may be displayed. In this case, the user clicks on the screen, for designation. To be more specific, on the screen that displays slip names, the user moves the cursor to the name of the slip he or she wants to use, and clicks on the name to read out the slip.

The hierarchical structure described above is also used when a person sells items and data is input. For example, when the person sells and designates items, the table of the slips that art in relation to the items is displayed. That is, a sales slip, an order-acceptance slip, a withdrawal schedule slip, a sales item number slip, etc. are selected.

If a check mark is written in the parentheses of G-axis parameters, a period of time can be designated. For example, when a check mark is inserted in the parentheses of -g2(), -g1() and g(), the period between the day before yesterday and today is designated. If a check mark is inserted only in the parentheses of g0(), today alone is designated. If a check mark is inserted in the parentheses of +g(3), the data related to the day that is three days from today can be checked. The manner in which the G axis parameters are used will be described later.

The system of the present invention adopts the data structure described above, and shared data is exchanged between a head office and a branch office, between a main office and a suboffice, and between a holding company and its affiliate companies. The manner in the data exchange is performed will be described later.

The system of the present invention has a function of day-by-day cumulative processing for slips. This function enables consolidated accounting between related the holding company and its related or affiliated companies, and further provides business assistance.

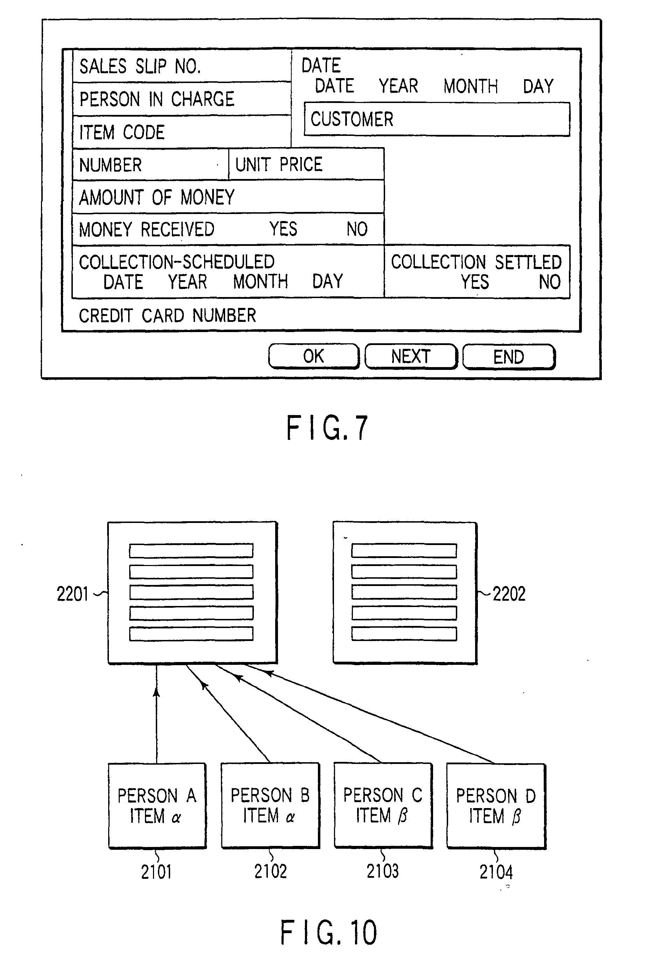

FIG. 7 illustrates the case where a person makes the sale and reads out a worksheet (e.g., a sales slip). In this case, the user sets the terminal in the sales data input mode.

FIG. 7 shows an example of a sales slip. When a Z-axis parameter is given in the control cell 1000 shown in FIG. 4A, the control address of the slip is obtained. The slip designated by the control address is displayed on the screen, and the portions to be filled in are blank. When the name of a person in charge is designated in accordance with the Y-axis parameters, it is automatically indicated in the person-in-charge portion of the slip. To add another person in charge, the name and the individual code of that person are entered.

Usually, a sales slip is used on the same day as the sale is made. Therefore, the current date is automatically described in the date of sales. The person in charge enters an indefinite-customer code if the code of the purchaser (i.e., the trading code) represents an unregistered individual customer. Then, the person in charge enters an item code corresponding to the items he or she sold, along with the number of items and the unit price. In response to this, the total amount of money is displayed.

Various methods are available when inputting item codes. One of them is to employ an optical reader to read the bar code attached to an item for sale.

Then, a check is made to see if a payment is made. If the payment is made on the same day as the sale is made, the mark "YES" is checked, and the data input is ended. If no payment is made, the scheduled date for collection is entered. If the payment is made with a credit card, its number is entered. The OK key is clicked to confirm the entered data. Where a plurality of kinds of items are sold, the next-page-slip display function is enabled to display the next-page slip.

The data entered as above is stored in the data cell 2000 on the basis of the control address data attached to the sales slip.

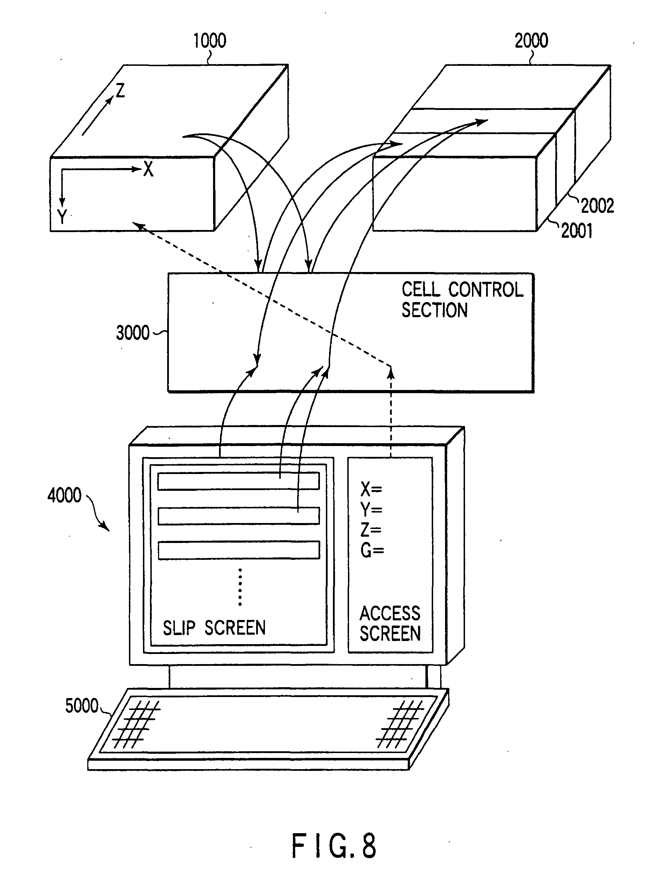

FIG. 8 shows how the control cell 1000 described above is related to the data cell 2000, cell control section 3000, display 4000 and operation section 5000. Although a display controller controls the display 4000, illustration of this controller is omitted.

When parameters corresponding to the X, Y and Z of the control cell 1000 are designated, the slip shown in FIG. 7 is shown on the display, thereby enabling the user to enter data related to sales. In the descriptions below, reference will be made to case where the sales slip shown in FIG. 7 is displayed. A screen on which the user can enter parameters corresponding to the X, Y, Z and G axes is shown on the display 4000, and parameters are provided in this state. In response, the parameters are supplied to the control cell 1000 by way of the cell control section 3000. Then, the control cell 1000 designates a read address of the data cell 2000 under the control of the cell control section 3000. The display 4000 shows the designated slip screen designed for data entry. The user operates the keyboard of the operation section 5000 and writes the necessary data on the slip. The data, thus written, is stored in the data cell under the cell control section 3000.

The data cell 2000 includes two areas: one is an area 2001 in which the layout image data on a slip is stored; the other is an area 2002 in which data representing the numbers and letters to be inserted in the blank portions of the slip is stored. Although the control cell 1000 constitutes data, it also has a function of generating read and write addresses that are to be used for reading and writing data in the data cell.

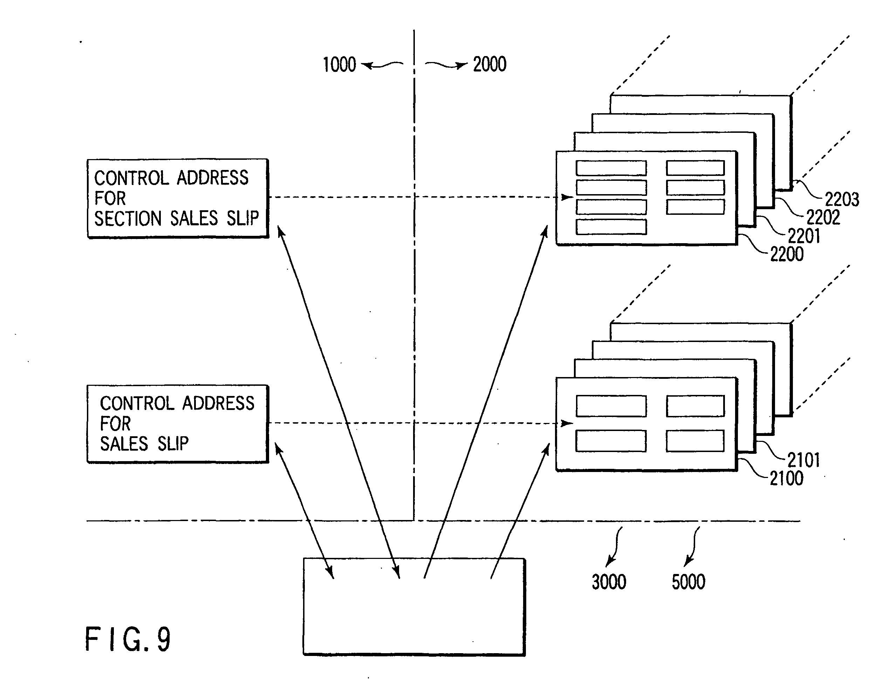

A more detailed description will be given with reference to FIG. 9.

FIG. 9 shows an area for the control cell 1000, an area for the data cell 2000, an area for the cell control section 3000, and an area for the operation section 5000. In the description below, reference will be made as to how the control cell 1000 is related to the item sales slip of a given person in charge and the organization (department) to which the person in charge belongs.

Let us assume that person A sells items α, and that the number of items sold is to be described in a blank sales slip. In this case, person A uses the operation section 5000 and the cell control section 300 to enter parameters that are required for acquiring the control address of a blank sales slip. In response to entry of the parameters, the control address for reading out a blank sales slip 2100 is supplied from the control cell 1000. The cell control section 3000 uses the control address and reads out the blank sales slip 2100 from the data cell 2000. The blank sales slip, read out on the basis of the control address, has blank data spaces. In other words, the slip is unused and is in such a state as shown in FIG. 7.

When the user enters the required data in the blank spaces of the slip and designates a saving operation, the data entered by the user are stored in the data cell 2000 as part of the sales slip 2101. In actuality, the data written in the data portions of the sales slip are stored. In other words, the sales slip 2101 is not the data that enables display of a slip but the data representing the descriptions in the spaces of the slip. The data that enables display of a slip is used in common to different blank sales slips 2100.

The sales slip 2101 (the sales information on person A) is stored at a different address from that of the blank sales slip 2100. When the sales slip 2101 is stored, the upper-limit control address that the sales slip has before the entry of the sales data is incremented. Hence, the sales slip 2101 is stored in the location of the next address. The incremented control address is supplied to, and stored in the control cell 1000.

As can be seen from the above, the control addresses that are sent from the control cell 1000 include two kinds: one is a control address used for accessing a slip desired by the user; and the other is a maximal address (an upper-limit address) currently used in the data cell 2000.

Next time person A sells items α and enters sales data, not only the control address used for reading out a blank sales slip 2100 but also the upper-limit control address (i.e. the address of slip 2101) is transmitted from the control cell 1000.

A description will now be given as to how section manager E, who is the boss of person A, reviews the item sales conditions relating to the section.

The first thing section manager E does is to enter parameters and acquire the control address 1000 for reading out the sales slip 2201. The control address 1000 is acquired from the control cell. In response to this, the terminal device displays the screen of the sales slip 2201 of the section, thereby indicating the item sales condition of each person. The sales slips 2202 and 2203 of the section are sales slips of another section.

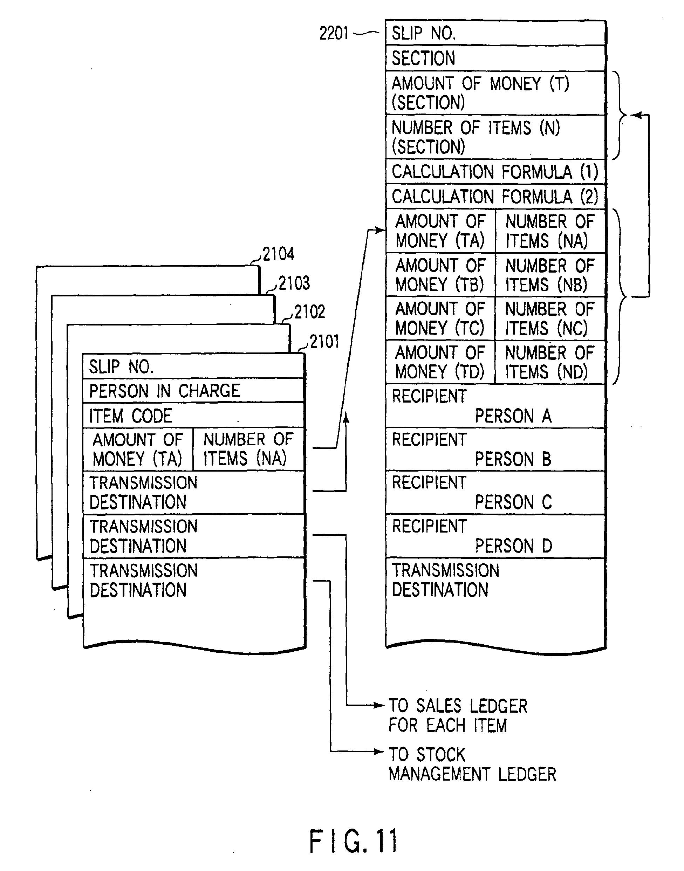

A description will be given of the internal processing function of slips with reference to FIG. 10.

Suppose that persons A, B, C and D belong to section AA, and that persons A and B have sold items α and persons C and D have sold items β. Also suppose that the persons enter sales information in sales slips 2101, 2102, 2103 and 2104 in the manner described with reference to FIG. 7.

The sales information is processed as the sales slip of the section the persons A, B, C and D belong to. To be more specific, the sales data individually entered can be calculated on the sales slip of the section. Slip 2202 shown in FIG. 10 is a sales slip pertaining to another section.

The correlation function between slips will be described.

FIG. 11 shows details of the slips 2101 and 2201. When a person enters data on sales slip 2101, the data is supplied to the sales slip 2201 of the section.

The sales slip 2101 used by person A is illustrated by way of example. A person enters the number of items (NA) he or she sold and the price of one item, and then completes the operation (saving operation). In response to this saving operation, the transmission destination information associated with the slip is referred to. This reference information and the calculation function (which is to be described later) are provided for either the cell control section 3000 or the system control section 8000. It should be noted that the slip is used as none other than data (including actual data and an address).

When data is written in the slip 2101, and the transmission destination information is referred to, it is determined that the price and number are information that should be transmitted to the sales slip 2201 of the section. In the sales slip 2201 of the section, the name of the receiving person is registered. If the code registered in the slip 2201 and representing the receiving person coincides with the code of person A of the sales slip 2101, the sales amount (N) and the number (A) are updated on the sales slip 2201 of the section. That is, calculations represented by "N ← N + NA" and "T ←T + TA" are performed. The sales slip 2201 of the section describes an address representing the location where the calculation formula (1) used for this calculation is stored. The self control section 3000 reads the address of the calculation formula (1), recognizes the calculation formula, and computes the price (T) and the number (N) of items.

The sales information on each section is transmitted to the sales ledger of a division in a similar manner to that described above, and the sales information on each division is transmitted to the sales ledger of the entire company or the entire branch office. This is because the transmission designation information and the reception information are described in the slips. In the above explanation, the common terms "slip" and "ledger" are used, but they are actually data file storage areas of a storage section or a storage medium of a computer.

Since the information transmission is executed whenever necessary, executives can grasp the latest information on the item sales by the entire sales at all times. When the sales information of a company's division is transmitted to a remote branch office or head office, a public line, radio transmission or other suitable transmission means may be used.

In the above, reference was made to the case where the sales information on a person was described in the sales slip of a section. It should be noted, however, that other kinds of information, such as the ledger information on the sales of each of the sales items, and the stock management ledger information, are also described in the sales slip. Owing to this feature, the sales information or stock information on each of the sales items can be updated and displayed in relation to each section, each division or the entire company.

The slip described above includes calculation formula (2). This formula is used when correction processing information is received.

Although the above description was given, referring to the sales management and stock management, the present system provides various kinds of other slips. Such slips can also be put into use by following the rules described above.

In a similar manner to that of the above rules, the reception slip information can be displayed in no time in accordance with each section, each division and the entire company. Likewise, the payment slip information can be displayed in no time in accordance with each section, each division and the entire company.

By use of the amounts of the reception and payment slips, balance sheets can be easily prepared for each section, each division and the entire company. According to the present invention, therefore, information on balance sheets is defined in relation to the Z axis.

Information on the G axis and how to use the information will be described.

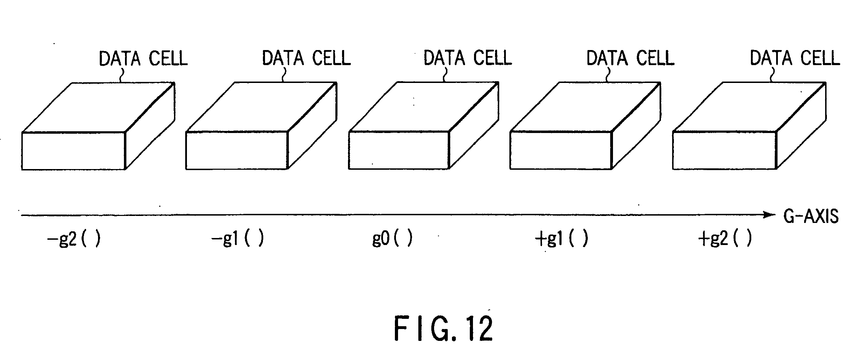

Referring to FIG. 12, the assistance apparatus of the present invention has a cell storage section in which data cells are prepared in units of one day. For example, the cell indicated by g0() is a cell for today, the cell indicated by -g1() is a cell for yesterday, the cell indicated by -g2() is a cell for the day before yesterday, the cell indicated by +g1() is a cell for tomorrow, and the cell indicated by +g2() is a cell for the day after tomorrow. In this manner, the system of the present invention prepares cells for the respective days of one year or several years.

The point of time used for determining the data contents of each cell as one-day information may be based on the universal time. Alternatively, any point defined in the standard time of each country or region may be used so as to determine the data contents of each cell as one-day information.

The preparation of these cells enables graphic display of how item sales are going. Furthermore, it is possible to predict the sales state for several days ahead or for one month ahead by looking at the information on the slips to be received.

In describing the embodiment shown in FIG. 3, reference was made to the case where the control cell 1000 is provided for the control data service company CDSC and the data cell 2000 is provided for a terminal device of the sales company SC. It was also assumed that the terminal of the control cell 1000 was on line whenever the data in the data cell 2000 was accessed.

However, the present invention is not limited to the embodiment described above.

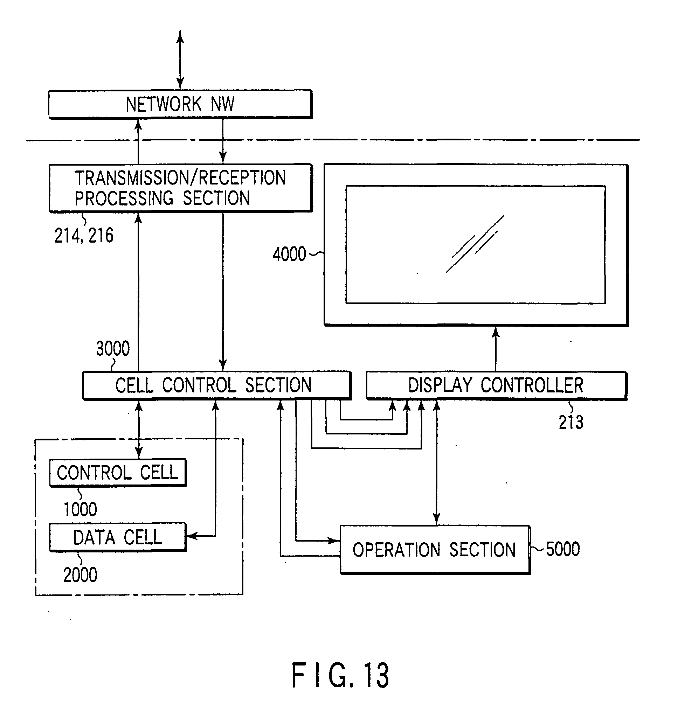

FIG. 13 shows another embodiment of the present invention. In FIG. 13, the same reference numerals as used in FIG. 3 denote similar or corresponding functions. In the alternative embodiment, the control cell 1000 is fetched in the memory section of the terminal (e.g., the cell file shown in FIG. 2), and the data cell 2000 is accessed by use of a control address stored in the fetched control cell 1000.

In the alternative embodiment, the on-line state in which the connection to the control data service CDAC by way of the network NW is enabled, need not be maintained at all times. The on-line state may be maintained only when the control cell 1000 is being fetched.

This system is disadvantageous in that after the control cell 1000 is permanently stored in the cell file of the terminal, data reception from the control data service company CDSC is no longer needed. In other words, storage of the control cell 1000 deprives the control data service company CDSC of the revenue that is based on the data service charge.

To solve this problem, the present invention clears the control cell 1000 when the terminal is switched off or if no operation is performed for a predetermined length of time. If the user finds the control cell 1000 cleared, he or she establishes an on-line state and fetches the control cell 1000 once again from the control data service company CDSC.

The present invention is not limited to the above embodiments.

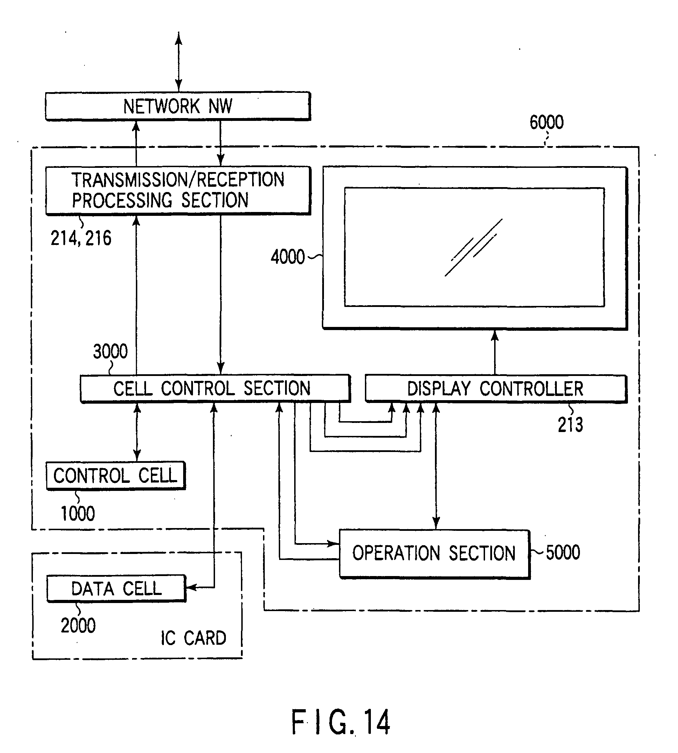

FIG. 14 shows still another embodiment of the present invention.

The data cell 2000 described above is independently stored in the memory of an IC card, and can therefore be carried by the individual. When the data in the data cell 2000 is accessed to perform data input, modification or addition, the data cell 2000 is connected to a terminal 6000. This terminal 6000 may be installed in a public telephone box, or realized as a personal computer. In addition, the terminal 6000 may be a cellular or mobile phone.

When the user connects the data cell to the terminal 6000, the operation described with reference to FIG. 11 is enabled. In this case, person A sells items $\alpha$ at a place away from the office and then uses the public terminal to transmit the information to the sales slip of his or her section, as shown in FIG. 11.

In the case described in the preceding paragraph, processing is effected within the same data cell. This means that the section's sales slip in the head office does not reflect any changes. Accordingly, the present invention is designed as follows:

The transmission destination information includes a description of the information representing where data should be addressed to by way of the communication line. When person A enters data in the sales slip, operates the operation section 5000, performs the saving, and selects a transmission mode, the data described in the sales slip is transmitted through the communication line to the transmission destination described in the transmission destination information. The transmission destination information is also referred to as communication protocol information or transmission protocol information. On the basis of this information, a person who sells items can write sales information in the sales slip of the head office's section that he or she belongs to.

A reception protocol is determined for a terminal that receives information. From the contents of a reception protocol, the name of a person in charge, the section that he or she belongs to, etc. are recognized. On the basis of this recognition, the data write portions of the section's slip are also recognized. Hence, the sales information on each person, the sales information on the section that each person belongs to, and the sales information on the division that the section belongs to, are stored in the database of the head office.

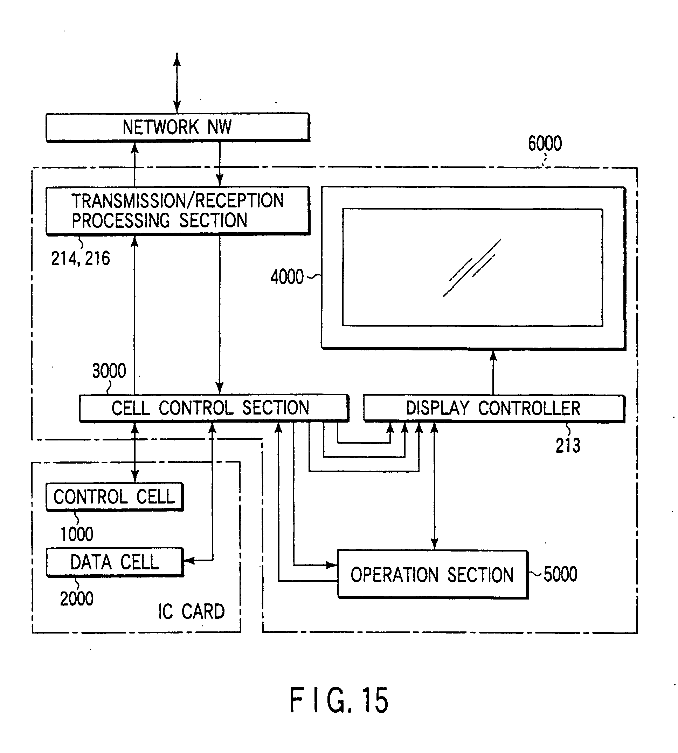

FIG. 15 illustrates still another embodiment of the present invention. In the embodiment shown in FIG. 14, the data cell 2000 is provided in the IC card, and the control addresses of the data cell 2000 are stored in the control cell 1000 of the terminal 6000. In the embodiment of FIG. 15, however, both the control cell 1000 and the data cell 2000 are provided for the IC card.

According to this system as well, the user is connects the IC card to the terminal, and sets the relationships among the cell control section 3000, each cell, operation section 5000, display 4000, etc. Then, the user executes data access or input processing. In this case, the charge for using the terminal is paid by the user who owns the IC card.

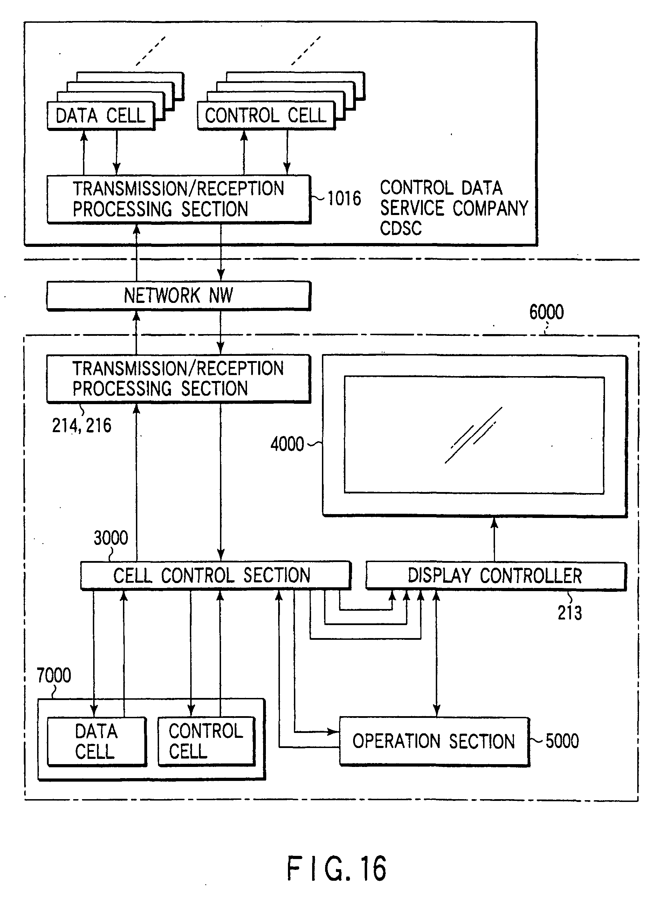

FIG. 16 shows still another embodiment of the present invention.

According to this embodiment, the control data service company CDSC manages the data on each company and the data on each employee. Using a terminal 6000, each employee enters his or her personal identification number, section code, etc. and requests that the corresponding data cell and control cell be sent from the control data service company through the network.

In response to the request, the control data service company CDSC sends the requested data cell and control cell. The data cell and the control cell are temporarily stored in the memory of the terminal 6000. In this state, the user enters sales information and other information on a slip in the manner described above. The information, thus entered, is saved, so that newly-entered data is accumulatively stored in the cell. Thereafter, the cell transmission mode is selected, in which the cells are transmitted from the memory 7000 to the predetermined area of the memory of the control data service company CDSC.

According to this system, the user or employee can entrust the saving of his or her business management information to the service company, and input or use data through the communication means by operating his or her terminal.

In the above description, reference was made to the case where one data cell was provided in one company, and where information was transmitted to its destination through a communication line or internal processing between slips was executed.

It should be noted, however, that a large number of cells, not a single cell, may be provided in one company. In this case, cell management information is prepared, and cell numbers (which differ distinctly from dates) are assigned to the respective cells.

In the foregoing description, reference was made to the case where information on a slip of a lower hierarchical level was transmitted to a slip of an upper hierarchical level. Specifically, the item sales information on persons is transmitted to the slip of the section that the persons belong to The data of the sales slip of the section is thereby updated, and transmitted to the slip of the division. In the case where two or more cells are provided, special measures must to taken to process the information described in the slips of the same hierarchical level.

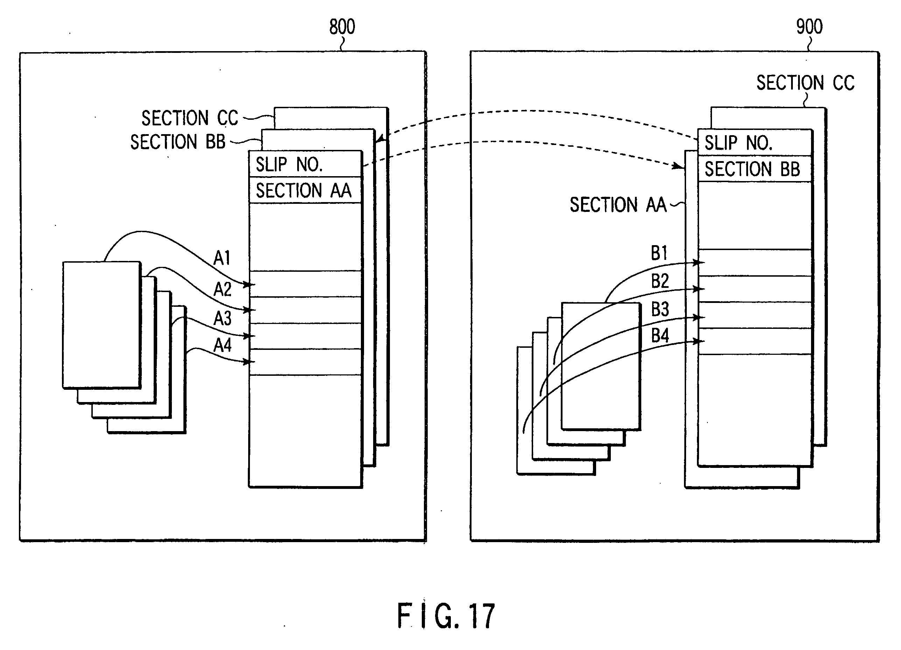

FIG. 17 shows the fundamental operation performed when information is exchanged between cells. Let us assume that cell 800 and cell 900 are used by section AA and section BB, respectively, and that persons A1, A2, A3 and A4 belong to section AA and persons B1, B2, B3 and B4 belong to section BB. Each person sells items, and the sales information on each section is entered in the manner shown in FIG. 11.

The time when information should be exchanged between cells is preset by the system, such as "once a day" or "once in two days." In this manner, the information exchange between cells may be controlled by a communication protocol. In cell 800, the information on section AA is accumulated and updated when necessary, while the information in the slip of section BB remains blank or not updated. On the other hand, in cell 900, the information on section BB is accumulated and updated when necessary, while the information in the slip of section AA remains blank or not updated. If the function of information exchange between cells works in this state, the information on section AA is transmitted from cell 800 to cell 900, and written in cell 900 as the information on section AA. Conversely, the information on section BB is transmitted from cell 900 to cell 800, and written in cell 800 as the information on section BB.

After the information described above is executed, a plurality of data cells will contain the same contents. In other words, data is transmitted between slips (worksheets) of the same (one and the same) hierarchical level. In the above, one cell was described as corresponding to one section, but a cell may be prepared for each of the companies. Needless to say, the communication protocol may be so determined as to specify the cells between which information exchange is executed. By doing so, all microcomputers can share the same data. It is natural that the computers that share the same data be limited to those computers for which mutual exchange of signals is permitted.

As can be understood from the above, the sales information is created not within one cell of one computer but in cells of all computers for which mutual exchange of signals is permitted. This means that the transmission processing section 216 does not function until the data including sales data has been updated. Since the same data is shared by different computers, it is not lost even if any one of the microcomputers breaks down. If a microcomputer is newly added to the intra-company network and is to share the data, what is required is merely to transmit the data thereto from another microcomputer.

The information exchange may be executed among the companies of the same group or among the companies that have commercial business relations. Determining the mutual communication protocol among the computers enables the mutual information exchange.

The entire system of the present invention has the information systems (a) to (d) set forth below. The information systems enable easy creation of a data cell and a control cell.

(a) The items (business parts models) of a plurality of function blocks, which are organized as business groups, are classified beforehand.
(b) The items of a plurality of work records (e.g., ledgers, forms and slips), which are used in the business parts models, are classified beforehand.
(c) In particular, the names of the items of the work records are classified in such a manner that they have meanings associated with business and implying the contents of the items.
(d) The work records are defined as worksheets on which work data is entered, and the classifications described above are shared and used by all terminals.

Industrial Applicability

As described above, the present invention can provide a business data management method and a business data management apparatus, which enable the user to handle and manage business at low cost. By providing the system according to the present invention, a provider can make a profit by receiving the usage charge the user pays for using the system.

**Claims**

1. A business data management method which is for use in a system comprising a control data service section, a terminal section, and communication means for connecting the control data service section and the terminal section to each other,

said data service section including a control address used by the terminal section, and said terminal section including a storage section for storing a data cell,
said business data management method comprising the steps of:

fetching the control address through the communication means; and
accessing the data cell by use of the control address.

2. A business data management method according to claim 1, wherein said control data service section transmits the control address to the terminal section in response to a request by the terminal section, after the communication means connects the terminal section and the control data service section together.

3. A business data management method according to claim 1, wherein said control data service section transmits a control cell including the control address to the terminal section within a predetermined period of time, after the communication means connects the terminal section and the control data service section together.

4. A business data management method according to claim 3, wherein said terminal section deletes the control cell transmitted thereto, when the terminal section has been used for more than a predetermined period of time.

5. A business data management method according to claim 3, wherein said terminal section deletes the control cell transmitted thereto, when the terminal section has been switched off.

6. A business data management method which is for use in a system comprising a terminal section connectable to communication means, a storage section provided in the terminal section and storing a control cell in which a control address is stored, and an IC card connectable or disconnectable from the terminal section and storing a data cell, said business data management method comprising steps that are executed when data is written in the data cell of the IC card, the steps enabling a control address, used for accessing the data cell, to be fetched from the control cell of the terminal section, and setting a data write address by use of the control address.

7. A business data management method which is for use in a system comprising a terminal section connectable to communication means, an IC card connectable or disconnectable from the terminal section, and a control cell storage section provided in the IC card and storing a data cell and control addresses serving as read/write addresses of the data cell, the business data management method comprising steps that are executed when data is written in the data cell, the steps enabling the control address, used for accessing the data cell, to be fetched from the control cell, and setting the write address of the data.

8. A business data management method which is for use in a system comprising a data service section, a terminal section, and communication means for connecting the data service section and the service section to each other,

   said data service section including a control cell storage area in which a data cell and write and read addresses of the data cell are stored, said business data management method comprising the steps of: causing the terminal section to fetch the data cell and the control cell through the communication means; writing data in the data cell by entering an operation input from the operation section and using the control cell; and transmitting the data cell, in which at least data is written, to the data service section through the communication means.

9. A business data management apparatus comprising:

   a data cell storage section;
   a storage section for storing a control cell having control addresses which include write and read addresses of the data cell,

   wherein, when data is written in the data cell, the control access, which is used for accessing the data cell, is fetched from the control cell, and the read or write address of the data is set; and
   means for fetching the control cell from a remote service section through communication means and using the control address included in the control cell.

FIG. 1

FIG.2

EP 1 209 593 A1

CONTROL DATA
SERVICE COMPANY CDSC

~1000

CONTROL CELL

1014

TRANSMISSION/RECEPTION
PROCESSING SECTION

~1016

NETWORK NW

SC

TRANSMISSION/RECEPTION
PROCESSING SECTION

214, 216

4000~

3000

CELL CONTROL SECTION

DISPLAY CONTROLLER

213

DATA CELL

2000

OPERATION SECTION

~5000

F I G. 3

X ⋯ REGION
Y ⋯ ACTIVITY
Z ⋯ SLIP, TABLE, OR THE LIKE

# FIG. 4A

| x1 ( ) | x2 ( ) | x3 ( ) | x4 ( ) | x5 ( ) | x6 ( ) |
|---|---|---|---|---|---|
| AREA 1 | COUNTRY 1 | STATE 1 | PREFECTURE 1 | CITY 1 | TOWN 1 |
| AREA 2 | COUNTRY 2 | STATE 2 | PREFECTURE 2 | CITY 2 | TOWN 2 |
| AREA 3 | COUNTRY 3 | STATE 3 | PREFECTURE 3 | CITY 3 | TOWN 3 |
| ... | ... | ... | ... | ... | ... |
| AREA n | ... | ... | ... | ... | ... |

$X = \{x1 ( ), x2 ( ), x3 ( ), \cdots\}$

# FIG. 4B

15

| y1 ( ) | y2 ( ) | y3 ( ) | y4 ( ) | y5 ( ) | y6 ( ) | y7 ( ) |
|---|---|---|---|---|---|---|
| COMPANY | USER'S COMPANY | HEAD OFFICE | DEPARTMENT | DIVISION | SECTION | PERSON IN CHARGE |
| ORGANIZATION | ANOTHER COMPANY | BRANCH OFFICE | DEPARTMENT | DIVISION | SECTION | PERSON IN CHARGE |
| GROUP | | ...... | ...... | ...... | SECTION | PERSON IN CHARGE |
| | | COMPANY A | | | ...... | ...... |
| | | COMPANY B | | DIVISION | ...... | |
| | | ...... | | | | |

FIG.5

z1 ( )

| z1 ( ) |
|---|
| SALES SLIP |
| ORDERING SLIP |
| ORDER ACCEPTANCE SLIP |
| PAYMENT SCHEDULE SLIP |
| ... |
| ... |
| COLLECTION SCHEDULE SLIP |
| PAYMENT SETTLEMENT SLIP |
| COLLECTION SETTLEMENT SLIP |
| ACCRUED SLIP |
| SALES NUMBER SLIP |
| INVENTORY TABLE |
| BALANCE SHEET |
| ... |

z2 ( )

| z2 ( ) |
|---|
| ITEM $\alpha$ |
| ITEM $\beta$ |
| ITEM $\theta$ |
| FEES |
| ... |
| ... |

z3 ( )

| z3 ( ) |
|---|
| TRADING PARTNER A |
| TRADING PARTNER B |
| TRADING PARTNER C |
| ... |
| ... |
| ... |

FIG. 6

| SALES SLIP NO. | DATE |
| --- | --- |
| | DATE   YEAR   MONTH   DAY |
| PERSON IN CHARGE | CUSTOMER |
| ITEM CODE | |
| NUMBER | UNIT PRICE |
| AMOUNT OF MONEY | |
| MONEY RECEIVED     YES     NO | |
| COLLECTION-SCHEDULED<br>    DATE   YEAR   MONTH   DAY | COLLECTION SETTLED<br>               YES        NO |
| CREDIT CARD NUMBER | |

[ OK ]   [ NEXT ]   [ END ]

F I G. 7

2201

2202

PERSON A
ITEM α
2101

PERSON B
ITEM α
2102

PERSON C
ITEM β
2103

PERSON D
ITEM β
2104

F I G. 10

F I G. 8

FIG. 9

EP 1 209 593 A1

2201 —

| SLIP NO. | |
|---|---|
| SECTION | |
| AMOUNT OF MONEY (T) (SECTION) | |
| NUMBER OF ITEMS (N) (SECTION) | |
| CALCULATION FORMULA (1) | |
| CALCULATION FORMULA (2) | |
| AMOUNT OF MONEY (TA) | NUMBER OF ITEMS (NA) |
| AMOUNT OF MONEY (TB) | NUMBER OF ITEMS (NB) |
| AMOUNT OF MONEY (TC) | NUMBER OF ITEMS (NC) |
| AMOUNT OF MONEY (TD) | NUMBER OF ITEMS (ND) |
| RECIPIENT PERSON A | |
| RECIPIENT PERSON B | |
| RECIPIENT PERSON C | |
| RECIPIENT PERSON D | |
| TRANSMISSION DESTINATION | |

2104
2103
2102
2101

| SLIP NO. | |
|---|---|
| PERSON IN CHARGE | |
| ITEM CODE | |
| AMOUNT OF MONEY (TA) | NUMBER OF ITEMS (NA) |
| TRANSMISSION DESTINATION | |
| TRANSMISSION DESTINATION | |
| TRANSMISSION DESTINATION | |

→ TO SALES LEDGER FOR EACH ITEM

→ TO STOCK MANAGEMENT LEDGER

F I G. 11

EP 1 209 593 A1

DATA CELL DATA CELL DATA CELL DATA CELL DATA CELL

→ G-AXIS

$-g2(\ )$    $-g1(\ )$    $g0(\ )$    $+g1(\ )$    $+g2(\ )$

F I G. 12

NETWORK NW

TRANSMISSION/RECEPTION
PROCESSING SECTION

214, 216

4000

3000

CELL CONTROL SECTION

DISPLAY CONTROLLER

213

CONTROL CELL

1000

DATA CELL

2000

OPERATION SECTION ~5000

F I G. 13

23

NETWORK NW

6000

TRANSMISSION/RECEPTION PROCESSING SECTION

214, 216

4000

3000

CELL CONTROL SECTION

DISPLAY CONTROLLER

213

CONTROL CELL

1000

OPERATION SECTION ~5000

DATA CELL

2000

IC CARD

F I G. 14

F I G. 15

DATA CELL

CONTROL CELL

TRANSMISSION/RECEPTION PROCESSING SECTION ~1016

CONTROL DATA SERVICE COMPANY CDSC

NETWORK NW

6000

TRANSMISSION/RECEPTION PROCESSING SECTION

214, 216

4000~

3000

CELL CONTROL SECTION

DISPLAY CONTROLLER

213

7000

DATA CELL

CONTROL CELL

OPERATION SECTION ~5000

F I G. 16

SECTION CC

SECTION CC
SECTION BB

SLIP NO.

SLIP NO.
SECTION AA

SECTION BB

SECTION AA

A1
A2
A3
A4

B1
B2
B3
B4

FIG.17

EP 1 209 593 A1

## INTERNATIONAL SEARCH REPORT

| International application No. |
| --- |
| PCT/JP00/08691 |

A. CLASSIFICATION OF SUBJECT MATTER
    Int.Cl⁷  G06F17/60, G06F19/00, G06F17/30

According to International Patent Classification (IPC) or to both national classification and IPC

B.   FIELDS SEARCHED

Minimum documentation searched (classification system followed by classification symbols)
    Int.Cl⁷  G06F17/60, G06F19/00, G06F17/30

Documentation searched other than minimum documentation to the extent that such documents are included in the fields searched
    Jitsuyo Shinan Koho        1926-1996    Jitsuyo Shinan Toroku Koho  1996-2001
    Kokai Jitsuyo Shinan Koho  1971-2001    Toroku Jitsuyo Shinan Koho  1994-2001

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
| --- | --- | --- |
| X | JP, 9-282307, A (Mitsubishi Electric Corporation), 31 October, 1997 (31.10.97), | 1,2,3 |
| Y | Full text; Figs. 1 to 15   (Family: none) | 4,5 |
| Y | JP, 6-103275, A (BROTHER INDUSTRIES, LTD.), 15 April, 1994 (15.04.94), Full text; Figs. 1 to 6   (Family: none) | 4,5 |
| X | JP, 64-38869, A (NEC Corporation), 09 February, 1989 (09.02.89), Full text; Figs. 1 to 5   (Family: none) | 8 |
| A | JP, 9-167191, A (Casio Computer Co, Ltd.), 24 June, 1997 (24.06.97), Full text; Figs. 1 to 22   (Family: none) | 1-9 |
| A | JP, 8-235288, A (Casio Computer Co, Ltd.), 13 September, 1996 (13.09.96), Full text; Figs. 1 to 24   (Family: none) | 1-9 |

☐  Further documents are listed in the continuation of Box C.    ☐   See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 16 February, 2001 (16.02.01) | 27 February, 2001 (27.02.01) |

| Name and mailing address of the ISA/ | Authorized officer |
| --- | --- |
| Japanese Patent Office | |
| Facsimile No. | Telephone No. |

Form PCT/ISA/210 (second sheet) (July 1992)